# EUROPEAN PATENT APPLICATION

(11) **EP 3 275 643 A1**
(43) Date of publication of application: **31.01.2018**
(21) Application number: 17181607.7
(22) Date of filing: 17.07.2017
(51) Int. Cl.: B32B 5/02, B32B 9/02, B32B 9/04, B32B 15/08, B32B 27/10, B32B 27/12, B32B 27/20, B32B 27/32, B32B 27/36, B32B 29/02, B32B 3/08, B32B 3/12, B32B 3/14, B32B 3/22, B32B 3/18, B32B 3/10

(54) **THERMOFORMABLE PANEL FOR SHELVES OR THE LIKE**

(30) Priority: 28.07.2016 IT 201600079664
(71) Applicant: SACO AEI Polymers, Inc., Sheboygan, WI 53081 (US)
(72) Inventor: SAVONUZZI, ANDREA, SHEBOYGAN, WI Wisconsin WI 53081 (US)
(74) Representative: Karaghiosoff, Giorgio Alessandro

(57) **Abstract**

Object of the present invention is a thermoformable panel for shelves, composed of:
at least one core plate having honeycomb structure consisting of a plurality of side-by-side cells;
a coating layer, or optionally two or more coating layers, comprising at least one thermoplastic material is coupled to said core plate on at least one face of said core plate.

The invention provides the use of stiffening elements in the form of at least one or more strips of metal and/or of "woven" plastic material, of the strap type, spread over the surface extent of at least one face of said honeycomb core, the metal strip or strips being restrained against or inside said honeycomb core by said at least one coating layer coupled by physical chemical adhesion against said at least one face of the honeycomb core.

## Description

Object of the present invention is a thermoformable panel for shelves, composed of:
at least one core plate having honeycomb structure consisting of a plurality of side-by-side cells;
a coating layer comprising at least one thermoplastic material coupled to at least one face of said core plate, preferably along the entire surface extent of said face.

Thermoformable panels with honeycomb core coated by a coating layer on at least one face, preferably on the two opposite faces, are known.

Currently these panels are mainly made by three technologies:
The first one is made by applying a mixture of fibers, in particular glass fibers and subsequently spraying thermosetting polyurethane onto a honeycomb core plate made for example of cardboard or the like. The technology is known as BayPreg.
The second one is made by using a honeycomb core plate of thermoplastic material instead of cardboard or the like and coating such core with nonwoven fabrics and/or thermoplastic films and subsequently further coating and stiffening the panel with plates of thermoplastic material;
The third commonly used technology is made by gluing a sheet of paper onto said honeycomb core plate, for example of cardboard or the like, and subsequently coating and stiffening the panel with plates of thermoplastic material.

In the case of the first and second technologies described above, the panels obtained in this way can be three-dimensionally shaped in a mold by compression molding.

The molding of panels of the third technology, with sheet of paper on honeycomb core plate, is very limited due to the very low tensile elongation of paper and therefore these panels are suitable for obtaining flat or very lightly shaped finished components.

Although Baypreg technology allows thermoformable panels with low specific weight and excellent mechanical strength to be obtained, nevertheless these are quite expensive, use "synthetic mineral fibers (smf)" that can cause toxicological problems and, in addition, the operations for spraying polyurethane on the honeycomb cores entail problems of bedaubing the operating members of production lines.

The above described second technology, which involves the use of a honeycomb core of thermoplastic material, traditionally polyolefin, has limited dimensional stability in hot thermal cycles due to the thermoplastic nature of the honeycomb core.

At present, attempts have been made to obtain thermoformable panels of the above described type by laminating foils or plates of thermoplastic materials on the faces of the honeycomb core. However, no remarkable results have been achieved through these attempts, since the coating layers formed by lamination, or another type of coupling of foils or films to the core plate, when bending (particularly in hot tests) are subjected to tensile, compressive and shearing stresses that cause them to be detached from the core plate with the resulting loss of physical chemical bonds and degradation of mechanical properties. Moreover, the moldability of the final composite panel depends on the type of honeycomb core used.

Since these types of panels are widely used in a large number of different fields, from the automotive to furniture and fixtures ones, as well as in structural elements in the building field, it is of great importance to be able to obtain such panels easier to be manufactured and cheaper, but without having to cope with a reduction in the mechanical properties and especially without having to cope with increases of density, i.e. weight, the mechanical strength being unchanged with respect to known panels of the same type.

Therefore the invention aims to produce thermoformable panels of the type described at the beginning which can overcome the drawbacks both as regards the manufacturing aspect and structure, weight, moldability, heat behavior, manufacturing flexibility depending on the final use and costs of the well-known panels.

In particular in the automotive industry, according to the current development direction, panels forming various parts of the vehicle's equipment or interior coating have to meet at best some requirements such as, for example, they have to be thin, light, rigid (even at temperatures between 80 and 115° C), as well as inexpensive, and also have to show good characteristics of waterproofness and sound absorption and to be produced from solvent-free and smf-free materials having low emission of volatile or potentially harmful substances and they also have to be recyclable.

The invention achieves the foregoing purposes with a thermoformable panel composed of:
at least one core plate having honeycomb structure whose cells have axis arranged substantially parallel to each other and oriented substantially perpendicularly to the faces of said core plate;
at least one coating layer coupled to said core plate on at least one face of said core plate;
and wherein the coating layer is composed of a film or skin made of thermoplastic material and coupled to said core plate through chemical/physical coupling;
while one or more stiffening elements in the form of at least one or more strips of metal and/or "woven" plastic material having high tf (high heat-softening temperature) are provided, the strips being of strap type;
which strips of metal and/or plastic material are spread on the surface extent of said at least one face of said panel to which said at least one coating layer is coupled;
the strip or strips being restrained so as to be locked in the panel structure thanks to at least one coating layer of the panel itself.

According to an embodiment, the coating layer is composed of a thermoplastic skin or film high-temperature coupled to a nonwoven fabric so that the ratio of film weight to nonwoven weight is able to prevent the cold flow of the fibers while the finished component is under stress.

According to an embodiment, the strips are spread on the surface extent of said at least one face of said honeycomb core to which said at least one coating layer is coupled;
the strip or strips are restrained so as to be locked to the honeycomb core by said at least one coating layer coupled by chemical-physical adhesion against said at least one face of the honeycomb core.

According to an embodiment said strips are at least partially embedded in the thickness of the panel or honeycomb core.

An embodiment provides that at least some strips are embedded in housings in the form of accommodating cut-outs or slits made in the thickness of the panel or honeycomb core.

A variation provides that at least some or all the metal strips are embedded in corresponding slits made in the thickness of the panel or honeycomb core substantially along their whole width.

Another possible variation provides that the housings are oriented substantially perpendicular to at least one face of the honeycomb core, so that at least part of at least some of the strips are positioned sideways or edgewise, i.e. perpendicularly to said at least one face of the honeycomb core.

The housings and thus the strips may extend deeply to almost the entire thickness of the panel or honeycomb core, ending at a certain distance from the face opposite to that where the metal strips are inserted, without passing from one side to the other of the honeycomb core and/or panel itself.

Again, according to a further embodiment, the metal strips have an inverted-L cross-section in which a branch of said "L-shaped" section is inserted into a corresponding housing or slit provided in the thickness of the panel or honeycomb core of the panel, while the other branch adheres against the surface of the panel, i.e. the honeycomb core of the panel that is substantially parallel to said surface.

The strips may also have cross-section shaped as a "T" or inverted-"U" or square or rectangular section open along one side.

Strips having different shapes among those described may be combined with the same panel, so that some of the strips at certain positions are arranged so as to be flat, others edgewise or perpendicular to the face of the panel or core, some tilted with respect to the perpendicular direction, and others may have one or more of the angled sections among the above described ones.

In an embodiment, the different types of strips coupled to a panel or panel core are spread according to a predetermined pattern.

The slits provided in one or more of the embodiments described herein may be manually made by means of blades or, according to a variation, by laser cutting or else, according to still another variation by mechanical cutting through pantographs.

This last type of cut is perfectly straight and makes it easy to insert the bars.

According to a variation the coating layer may comprise additional strips of coating material which extend each along the extent of a corresponding metal strip and which, when coupled, are incorporated into the thickness of the coating layer at least partially merging therewith.

Said reinforcing strips may be applied in a position in-between the honeycomb core, or the outer face of the panel, and the coating layer covering said faces and in a position coincident with a corresponding metal stiffening strip, or on the outer face of the coating layer still in a position coincident with a corresponding metal strip.

During the coupling of the coating layer to the face of the panel or honeycomb core in combination with the metal strips, it was found that if the individual reinforcing strips have sufficiently low thickness, they melt with the material of the coating layer, thus becoming incorporated therein without leaving marks due to thickenings or protruding bands of the coating layer at said reinforcing strips. But still contributing to reinforcing the strip contact area which, in the position fully embedded into the honeycomb core, occurs along a side edge corresponding to the thickness of the strip itself.

According to still a further characteristic, the housings or slits may be further sealed by high pressure/high temperature lamination (for example at 230°C and 40N/cm2) of thermoplastic strips possibly TNT-reinforced.

According to an embodiment, these strips have very limited width, for example between 10 and 20mm, as it is sufficient to structurally "contain" the transversal weakening of the structure of the panel and to limit the weight increase thereof due to the sealing material.

According to an exemplary embodiment, said sealing strips may be the same above described reinforcing strips which provide the double function of reinforcing and sealing the slits.

According to a further embodiment the metal strips, as regards either at least some or all of said strips and at least part of the width of their widest side, are arranged in a position where said side is in contact against the surface of at least one face of the panel or honeycomb core, said strip or strips being locked against the face of the panel or said honeycomb core by means of the coating layer which, when coupled to said panel or said honeycomb core, overlaps also said strip or strips.

An embodiment variation provides that at least some of the metal reinforcing strips are arranged in contact position against at least one face of the panel or honeycomb core along their whole length and width extent of their widest side.

The strips in a flat position apply good structural reinforcement in the tensioned state, i.e. when the panel is arched in the direction of the face of the honeycomb core having the metal strip or strips coupled thereto, whereas in a compressed state, i.e. when the panel is deformed to concave state of the face having the metal strips coupled thereto, the latter are not able to ensure the mechanical strength and tend to detach from the honeycomb core, additionally applying, at least locally, an action detaching the coating layer of the panel or honeycomb core.

According to an improvement of said two last embodiments in which at least part or the whole widest side of the strips adhere against the face of the panel or honeycomb core, one or more reinforcing strips are provided to be coupled to both the opposite faces of said panel or said honeycomb core.

Thus, there is always at least one strip applying a structural stiffening action when the panel is subject to a deformation that tends to bend it from one side and deflect it from the other.

In order to prevent excessive heat elongation of the metal strips, both in the variation where they are arranged to be flat against the surface of one or both sides of the core or panel, and in that where the strips have an angled section according to one of the above-described embodiments, such as L, T or U-shaped or the like, during the thermal cycles and subsequent shrinkage during cooling and the possible resulting detachment of the strips from the structure, the strips themselves can be positioned in shorter but adjacent segments so as to reduce the absolute value of deformation during the hot/cold cycle and prevent the strips from possibly detaching from the structure.

According to an embodiment, the distance of said adjacent segments is of the order of a few millimeters, preferably about 2-3mm.

The phenomenon of the strips detaching from the structure due to thermal expansion does not occur if they are vertically inserted, because the expansion of the strips during thermal cycles is "absorbed" by a slight waviness thereof inside the honeycomb structure. Such waviness does not jeopardize the elastic recovery of the panels themselves thanks to the sealing of the slots, as described above.

In all of the described embodiments and variations, the strips can be spread over the surface extent of the honeycomb core or panel either according to uniform or else uneven arrangements.

An embodiment that can be provided in combination with any of the above said embodiments provides that the strips are all oriented in the same direction and parallel to each other, preferably arranged in a straight line.

In a further embodiment, the strips may be made partially of a type of material such as metal, and partially of another type of material such as plastic material.

Still according to a further embodiment, the strips can be positioned on one or both sides of the panel or core in non-parallel directions and, in a variation, can possibly intersect each other.

In a further embodiment the strips, or at least some of them, are oriented parallel to the longitudinal extent of the honeycomb core or panel, i.e. along the direction of the longest side of the honeycomb core or panel.

The metal strips are relatively thin and may have thicknesses below the millimeter, preferably not more than 0.5mm.

A preferred embodiment provides that the strips have thickness between 0.05mm and 0.3mm.

The width of the strips may range between a width less than the thickness of the honeycomb core and a width between 0.5 and 10cm and, preferably, when the metal stiffening strips are arranged so as to be flat against the panel or honeycomb core, the width is less than 10cm and roughly from 2 to 6cm.

When the metal stiffening strips are arranged so that their widest side adheres against the faces of the panel or honeycomb core, the width may vary also depending on the mechanical features, in relation to the weight, desired for the panel and therefore depending on the number of strips and the density thereof in relation to the size of the faces of the panel.

With regard to the material, several metal materials are possible, but a preferred embodiment provides steel metal strips.

As regard to any further embodiments, it is also possible to provide panels in which at least some of the metal strips are at least partially embedded in the thickness of the panel or honeycomb core, according to one or more of the variations above described for this embodiment, also provided in combinations or sub-combinations with each other for some of said metal strips coupled to a same panel, and in which some of the metal strips are arranged so that at least part or the whole widest side thereof is in contact with the faces of the panel or honeycomb core, according to one or more of the variations described for this embodiment.

The coating layer may be composed of at least one plate of thermoplastic material filled with vegetable and/or mineral inerts, for example of polypropylene or other thermoplastic materials.

The thickness of the coating layer may range between 0.2 and 2mm, preferably between 0.2 and 0.6mm.

An embodiment variation that can be applied to any of the previously described combinations and sub-combinations, provides the possibility of either applying not only a coating layer, but also additional finishing layers or providing a coating layer in turn consisting of two or more layers different from one another.

According to a further variation, in the same panel multiple strips of different metal material and different sizes may be provided, relative to the thickness and/or width and/or relative to the position on the extent of the face of the panel or the honeycomb core to be coupled thereto.

Generally, the honeycomb core plate is made of paper or cardboard or other natural fibers, however this is a preferred but not limiting solution of the present invention, as it is possible to use any type of honeycomb core compatible with the material or coating layer or layers.

Further constructive characteristics of the panel according to the present invention are described in document WO2015/125023 that relates to a thermoformable panel having a honeycomb core and whose content is to be considered as part of the present description.

In particular, the document mentions a particular type of coating layer in which said coating layer is composed of a non-woven of a combination of different thermoplastic fibers, of which a first type of thermoplastic fiber having a softening temperature (viscoelastic transition) lower than that of at least one second thermoplastic fiber.

According to a further characteristic, the coating layer is composed of a layer of continuous fibers of a thermoplastic polymer having very higher softening temperature and of a film of a thermoplastic polymer whose softening temperature is lower with respect to said first thermoplastic polymer.

In a preferred embodiment, the lower softening temperature ranges from about 80°C to 120°C, while the higher softening temperature ranges from about 180°C to 300°C, particularly from about 210° to 250°C, preferably is about 230/240°C.

According to a further improvement, on the external face of the coating layer, before coupling it to the core plate, contemporaneously with said coupling or after said coupling, a finishing layer is coupled made of a thermoplastic material filled with vegetable and/or mineral fillers, particularly a coating layer of a mixture of polypropylene filled with wood flour.

In this first embodiment, the coating layer composed of the nonwoven material of plastic material fibers having a softening temperature higher than the plastic material of the film coupled to said nonwoven material, forms interstices among which the thermoplastic material with the lower softening temperature passes once the coating layer is brought in the viscoelastic condition by heating it, such that the plastic material of the film passes through the layer of nonwoven material and each fiber segment is incorporated in the plastic material with the lower softening temperature, forming a kind of grid embedded in the thermoplastic material with the lower softening temperature of the film and therefore a kind of reinforcement of the coating layer once the material is cooled.

According to an advantageous embodiment, it is preferred to provide a ratio of the amount of thermoplastic material with the higher softening temperature to the amount of thermoplastic material with the lower softening temperature in the order of 0.6: 1 up to 1:1.

In the so-made panel, the fiber contained in the coating layer of nonwoven material is used as a reinforcing fiber, since its stiffness is considerably increased by the action stopping the relative movement between the fibers in case of a stress exerted by the plastic material.

By a polyester, in particular polyethylene terephthalate.

In a further improvement the layer of nonwoven material is composed of a web of continuous filaments extruded through a spinneret block, so called nonwoven material (for example, spun bond or chemical bonded).

In an exemplary embodiment, the thermoplastic material having the softening temperature higher than the thermoplastic material of the film is composed of polyester, particularly polyethylene terephthalate.

The film of thermoplastic material having the lower softening temperature in this case can be composed of polyolefin material or of other polymers.

A further characteristic is the fact that the layer of thermoplastic material forming the finishing layer has thickness ranging from 0.5 to 3 mm, preferably in the order of about 1mm.

In a further embodiment the coating layer of nonwoven material has weight lower than 150 gr/m², preferably ranging from 90 to 110gr/m2, and thickness lower than 100 µm, particularly lower than or equal to 90 µm.

The film associated to said nonwoven material has weight lower than 90 gr/m², preferably lower than 70 gr/m², particularly lower or equal to 54 gr/m²mm and thickness lower than 100 µm, particularly lower than 80 µm, preferably lower than or equal to 60 µm.

A second embodiment of the coating layer provides said coating layer to be composed of a plate of thermoplastic material, particularly polyolefins, especially of polypropylene filled with flours of vegetable and/or mineral fibers and having a softening temperature between 60°C and 100°C, preferably of 80°C to which a finishing layer composed of a film or membrane of thermoplastic fibers having a softening temperature ranging from 180°C to 300°C, particularly from 210°C to 240°C, preferably of about 230/240°C is coupled preferably before the coupling on at least one of the two faces of the core plate, said coating layer being intended to be coupled with the core plate by the face opposite to that provided with the film or membrane of thermoplastic material.

A further characteristic is the fact that the layer of thermoplastic material has thickness ranging from 0.5 to 3 mm, preferably in the order of about 1mm.

According to an improvement, the film or membrane applied to the plate of thermoplastic material is made of a nonwoven material of a combination of different thermoplastic fibers, of which a first type of thermoplastic fiber having a softening temperature (viscoelastic transition) lower than that of at least a second thermoplastic fiber.

An embodiment provides said film to be composed of a layer of continuous fibers of a thermoplastic polymer having higher softening temperature and of a film of a thermoplastic polymer having the softening temperature lower than said first thermoplastic polymer.

According to a further characteristic, the lower softening temperature ranges from about 80°C to 120°C, while the higher softening temperature ranges from about 180° to 300°, particularly from about 210° to 250°C, preferably it is of about 230°C.

As regards the film or membrane applied to the thermoplastic material plate of such second embodiment of the coating layer, said film or membrane can be made according to what described above for the coating layer according to the first embodiment.

In this description and in the claims reference is made to a panel core or panel, this means that the strips can be coupled, according to the different modes described above, either directly to a panel core, such as the honeycomb core of cardboard or other materials, or to a panel which is a semifinished product and composed of at least one honeycomb core having a further layer coupled to one face or preferably the two faces thereof.

In this case, the slits or housings will be made by also cutting one of the two layers, when the strips are provided on a single side of the panel, or even the two layers when the stiffening strips are provided on both sides of the panel.

The present invention further relates to a method for manufacturing a thermoformable panel as previously described and wherein at least some of the metal strips are at least partially embedded in the thickness of the honeycomb core, according to one or more of the above described variations of this embodiment, the method comprises the following steps:
step a) generating a number of cut-outs or housings in the thickness of the panel and/or honeycomb core partially extending in said thickness, which cut-outs are open only to one face of the panel and/or said honeycomb core and have a predetermined pattern;
step b) inserting into each of said cut-outs a corresponding metal stiffening strip;
step c) coupling at least one coating layer to the two opposite faces of the panel or honeycomb core by means of physical chemical adhesion.

According to a variation providing reinforcements of the coating layer, these coinciding with at least some of the metal stiffening strips, before step C there is a step
b2) in which reinforcing strips of thermoplastic material, preferably of a material equal to that of the reinforcing layer, are arranged so as to directly overlap along at least some of the metal stiffening strips.

According to an embodiment variation, the step b2 is replaced by the step b3 in which reinforcing strips of thermoplastic material, preferably of the same material of the reinforcing layer, are arranged so as to directly overlap the coating layer on the opposite side with respect to the one in contact with the honeycomb core and so as to be, when coupled to the honeycomb core, in a position coincident with at least some of the metal stiffening strips before step c) is carried out.

Further object of the present invention is a method for manufacturing a thermoformable panel as previously described and wherein at least some of the metal strips have part of their widest side, preferably their widest side, adherent against at least one of the faces of the honeycomb core, according to one or more of the above described variations of this embodiment, which method comprises the following steps:
step a1) arranging one or more metal stiffening strips on one or both sides of the panel or honeycomb core;
step c) coupling at least one coating layer to the two opposing faces of the panel or honeycomb core by means of physical chemical adhesion, each of which layers adheres against both the corresponding face of the panel or honeycomb core and the strip or strips adhering against said face.

According to a further characteristic of the method, in step c, the coupling takes place in a rolling mill at a heating temperature between 180°C and 300°C, in particular between 210°C and 240°C, preferably about 230°C.

In addition, step c) is achieved at a softening temperature greater than 80°C, preferably at 180°C, in particular between about 210 and 240°C, preferably at about 230°C.

According to an embodiment, step c) may provide for the panel to be concurrently thermoformed in a mold according to a three-dimensional pattern of the panel.

When the stiffening strips are obtained from a flat strip and not directly from a drawing or extrusion process, then if strips having angled shaped section would be used, then prearranged steps have to be provided in order to shape the flat strip by means of continuous benders, molds or other shaping systems.

At the end of the shaping, for example, the strips leaving the bending station can be cut off by a cutting unit.

Cutting can also take place before shaping, but in this case the shaping process can not be continuous.

Still according to a further embodiment, the strips can be installed either directly on the panel core or on a panel formed by said core and at least one layer laminated on one face of said core, preferably on the two faces thereof, which layer has been applied in a step coming before:
installing the strips according to the embodiment in which they are flat and arranged parallel to the surface of one of the two sides of the panel;
forming cut-outs and then inserting strips therein.

Thanks to the present invention, high mechanical strengths together with an extremely lightweight panel as well as, above all, a quick and inexpensive process for manufacturing the panel, can be obtained through the combination of the honeycomb core preferably of vegetable fibers, which is sandwiched between two coating layers coupled to the two faces of the honeycomb core, by using said coating layers as locking layers to lock metal strips for the structural stiffening of the panel.

Unlike systems involving the spraying of a honeycomb core with a resin and the concurrent impregnation of a layer of mineral fibers with said resin, the production of the panels according to the present invention can be accomplished by simple continuous line processes involving coupling steps to couple the elements constituting the relatively simple panel, these coupling steps being quite simple and able to be carried out by lamination, calendering and the like without involving particular implementing problems or high costs.

These and other advantages of the present invention will be more apparent from the following description of some exemplary, non limiting embodiments depicted in the accompanying drawings, wherein:
Figures 1A to 1D show a first embodiment respectively in cross section and in different manufacturing steps and in a partially sectional plan view, respectively.
Figures 2A to 2D show, similar to the previous figures, a first embodiment variation of the embodiment according to Figures 1A to 1D.
Figures 3A to 3D show, similar to the previous figures, a second embodiment variation of the embodiment according to Figures 1A to 1D.
Figures 4A to 4D show a second embodiment respectively in cross section and in different manufacturing steps and in a partially sectional plan view.
Figures 5A to 5D show, similar to the previous figures 4A to 4D, an embodiment variation of the embodiment according to Figures 4A to 4D.
Figures 6A to 6D show, similar to the previous figures, an embodiment variation in which the strips have "L"-shaped section.
Figures 7A to 7D show, similar to the previous figures, an embodiment variation in which the strips have "T"-shaped section.
Figures 8A to 8D show, similar to the previous figures, an embodiment variation in which the strips have rectangular section, open to one side, i.e. without one side or shaped as a staple.
Figure 9 shows a flow diagram of the manufacturing method of a panel according to the present invention and according to the embodiments of Figures 1 to 3 and 6, 7 and 8.
Figure 10 shows a flow diagram illustrating the steps for preparing the strip according to an embodiment.

The following description will illustrate various embodiments of the panel according to the present invention. These variations should not be considered as restrictive, but only exemplifying the inventive conception which consists in providing metal strip-shaped stiffening elements incorporated in the panel structure between the honeycomb core and at least one of the coating layers that are on one of the faces of the panel.

Although the examples show coating layers on both sides of the honeycomb core plate, even only one of the faces can be coupled to a coating layer or else the two faces can be coupled to different coating layers according to the various embodiments thereof provided in the present description.

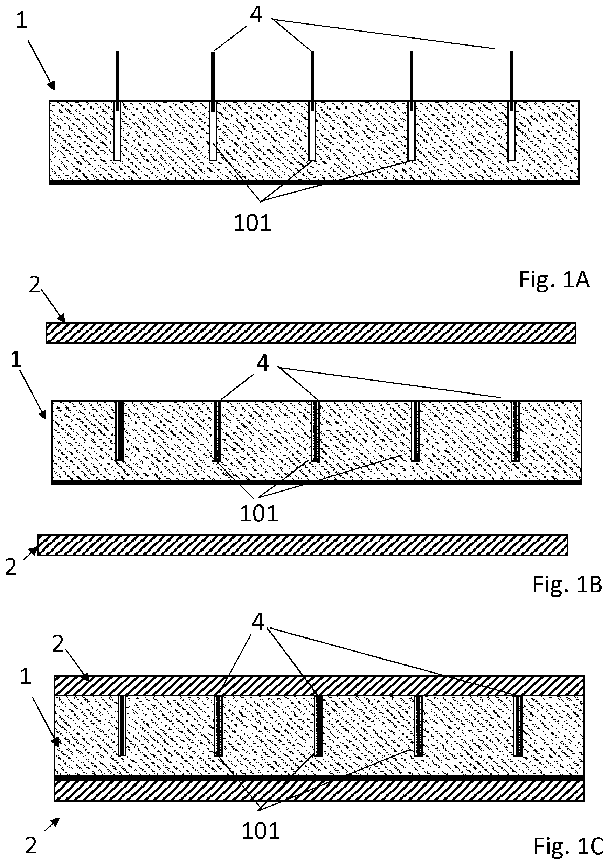

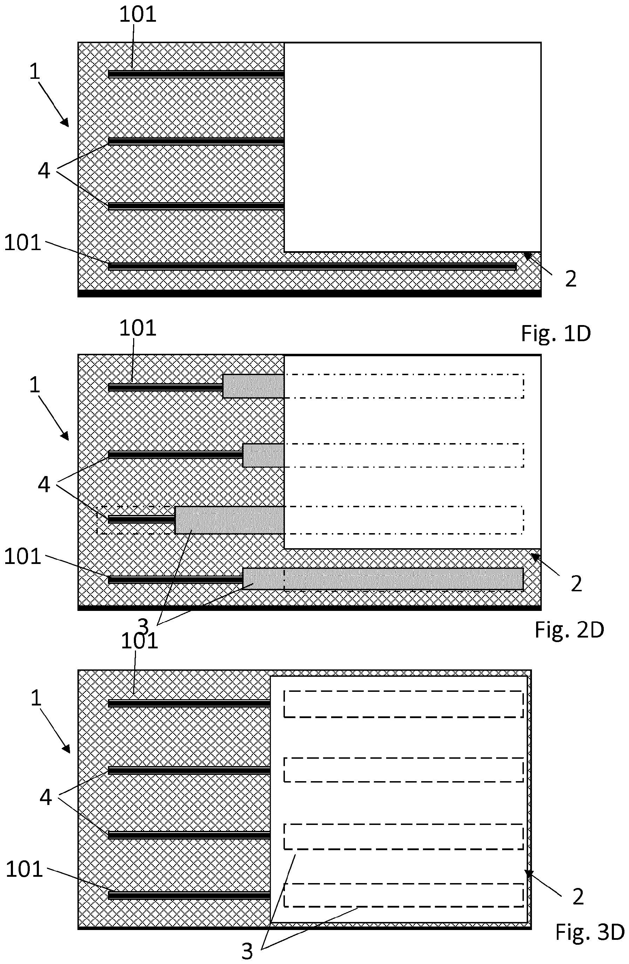

Figures 1C and 1D show a first embodiment in which a honeycomb core plate 1 is provided with a foil or a thin metal stiffening strip 4 each embedded in a housing 101 in the form of pocket or cut-out.

Any number of housings 101, and thus of metal stiffening strips 4, is possible. This number varies depending on the mechanical strength in relation to the overall weight of the panel.

The housings 101 are made so that their depth is less than the overall thickness of the honeycomb core plate 1 and, in the illustrated embodiment, the metal stiffening strips 4 are substantially completely embedded within the corresponding housing 101.

Alternatively, said metal strips 4 can be provided so that only a part of their width is embedded.

A first non-illustrated embodiment variation may provide that all said metal strips 4, or some of them, protrude only by a band along the peripheral longitudinal side edge, by a small amount with respect to their overall width, and such a protrusion, when the honeycomb core plate 1 is coupled by heating or compression to the coating layer or layers 2, is partially incorporated in the outer coating layer 2 or in the remaining thickness of the honeycomb core plate 1 on the bottom side of the housings 101.

Alternatively or in combination, it is also possible that at least some, if not all metal strips 4 protrude by a substantial portion of their overall width from the housings 101, and that said protruding part is bent against the surface of the honeycomb core plate 1 on the side of the housing openings 101.

This variation is not specifically illustrated, but it is clear from this description that in this case the cross-section of the strip would be "L"-shaped or possibly even "T"-shaped.

In the preferred example shown, the housings 101 and the metal strips 4 housed therein take an orientation perpendicular to at least one face of the finished panel or honeycomb core plate 1.

However, it is to be understood that according to a variation, at least some of said housings 101 and/or the corresponding metal strips 4 may have orientations more or less tilted with respect to the direction perpendicular to at least one face of the finished panel or honeycomb core plate 1 and/or also may have a possible profile non-straight in cross-section but always such as to allow the metal strip 4 and/or sheet to be inserted in the housings 101 themselves. This applies to all the above described variations.

Figures 1A and 1B show exploded conditions of the exemplary embodiment according to figures 1C and 1D, which conditions relates to steps of the panel manufacturing process.

In Figure 1, after the cut-outs 101 have been made in the thickness of the honeycomb core plate 1, to a depth such that they do not pass from one side to the other of the honeycomb core plate 1, but they leave the bottom end covered by a layer of material 201, the individual metal strips 4 are inserted into each of the housing 101 provided for them.

The cut-outs can be made by various working techniques, for example by means of knives or saws or by laser cutting.

Figure 1B shows the step of applying the coating layers 2 to the top and bottom faces of the laminated core plate 1 provided with metallic stiffening strips 4 embedded in the housings 101.

According to a non-limiting example, the honeycomb core plate is preferably made of cardboard or similar materials and is obtained according to known techniques.

According to an example, the coating layer or layers 2 are made of thermoplastic material, such as polypropylene or the like, filled with inert fillers such as vegetable fibers and/or mineral fibers.

According to still another variation, the coating layer or layers 2 may be constituted by at least two layers, preferably three layers, among which at least one layer consists of a nonwoven material of fibers of a first thermoplastic polymer and at least one second layer consisting of a film of a second thermoplastic polymer other than the thermoplastic polymer constituting the fibers of the nonwoven material and having a softening temperature (viscoelastic transition) lower than that of the thermoplastic polymer constituting the fibers of the nonwoven material.

In particular, the second thermoplastic polymer has the lowest softening temperature that ranges from about 80°C to 120°C, while the first thermoplastic polymer constituting the fibers of the nonwoven material has higher softening temperature that ranges from about 180° to 300°, particularly from about 210° to 250°C, preferably about 230°C.

In a variation, the coating layer 2 comprises two films constituted by the second thermoplastic polymer, the nonwoven material layer of fibers of the first thermoplastic polymer being provided in-between these two films.

For example, the nonwoven material may consist of PET fibers and can be coated with two films having a double effect, namely to stop the sliding of the fibers when they are subjected to a resulting force also obtained by using a mix of two fibers having different molecular weights and therefore different softening temperatures, as described above.

The coupling of the coating layer or layers 2 to the honeycomb core plate 1, according to the above described various variations, is carried out for example by hot rolling.

Preferably, the coupling takes place in a rolling mill at a heating temperature between 180°C and 300°C, in particular between 210°C and 240°C, preferably about 230°C.

In these conditions, referring to the embodiment in which the coating layer 2 is made of at least one film and at least one nonwoven material layer, the polymer with lower viscoelastic transition temperature penetrates the interstices of nonwoven fibers. The latter remain substantially intact since they are made up of a polymer having higher softening temperature. Therefore, the mass of the polymer having lower softening temperature surrounds and swallows up the fibers thereby forming a reinforcing grid that, upon cooling, remains firmly anchored in the polymer material having lower softening temperature. At the same time, the pressure applied during the lamination against the honeycomb core plate 1 is such as to cause the coupling to the honeycomb core plate 1 as described in document WO2015/125023 and, at the same time, the sealing and locking of the metal strips inside the housings and/or against the honeycomb core plate 1.

The thickness of the coating layer 2 may range between 0.2 and 0.6mm, preferably between 0.3 and 0.4mm.

As regards the metal stiffening strips or sheets 4, their size and number and arrangement on the surface of the panel or honeycomb core plate 1 may vary depending on the mechanical strength effects, in relation to the overall weight of the panel, required by the use specifications of the panel itself.

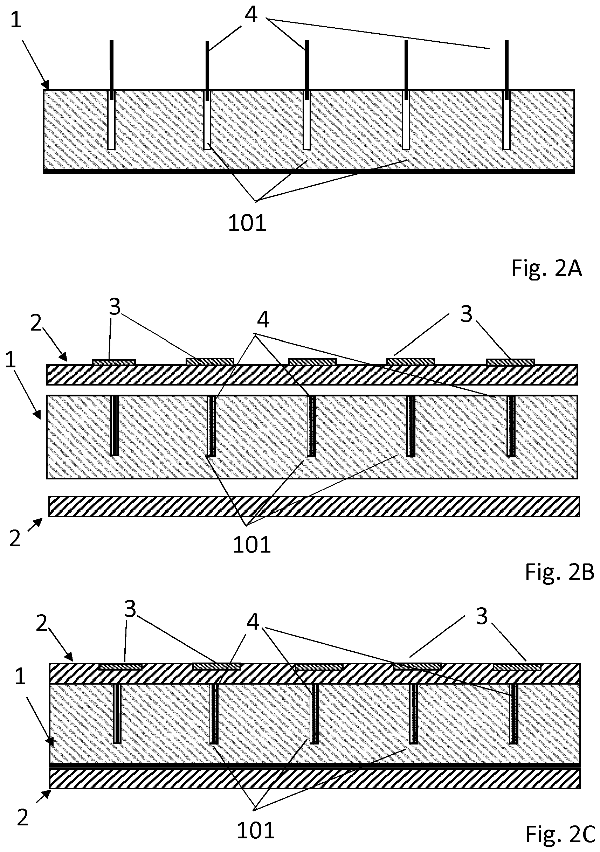

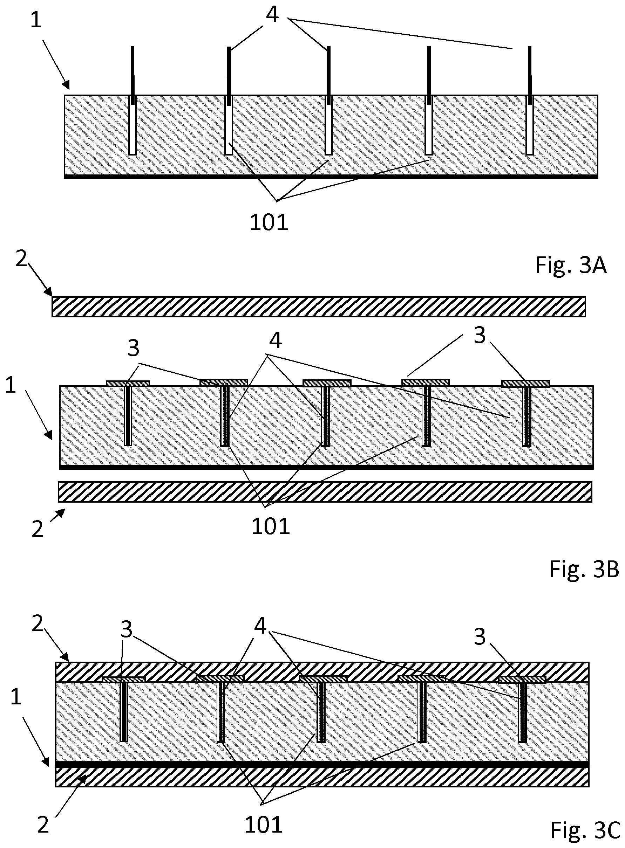

Figures 2A to 2D and 3A to 3D show two embodiments of an embodiment variation in which the opening area of the housings 101 of the metal strips 4 is further reinforced to effectively restrain and lock in place said strips or said sheets 4. In fact, in case of panel bending, the sideways edges of the sheets or strips act against the coating layer and may cut the layer thereby jeopardizing both the mechanical constraint to the panel and the stiffening effect.

In this case, in the embodiment of Figures 2A to 2D, there is not only the coating layer 2 coupled to the honeycomb core 1 but also reinforcing strips 3 of coating material which are made of thermoplastic material compatible with that of the coating layers 2, preferably of the same material, and which extend each along at least part of the length of each housing 101 and therefore of each metal strip 4. The strips have width such as to overlap to a certain extent the two longitudinal edges of the housings 101 and, in the example shown in Figures 2A to 2D, are arranged on the outer face of the coating layer before the latter is coupled to the honeycomb core 1 provided with the housings 101 and the metal strips 4.

The hot-rolling coupling process swallows up the reinforcing strips 3 into the material mass of the coating layer 2, generating, at the end of hot rolling, a reinforced zone coincident with each metal strip 4 and at the same time an outer surface of the coating layer without protrusions at said reinforcing strips 3 and wherein said strips are no longer visible.

The embodiment of figures 3A to 3D differs from the previous one because the reinforcing strips 3 are arranged directly on the honeycomb core plate 1 and are overlapped by the coating plate 2.

The hot rolling action causes a similar effect to that described in the previous variation of figures 2A to 2D.

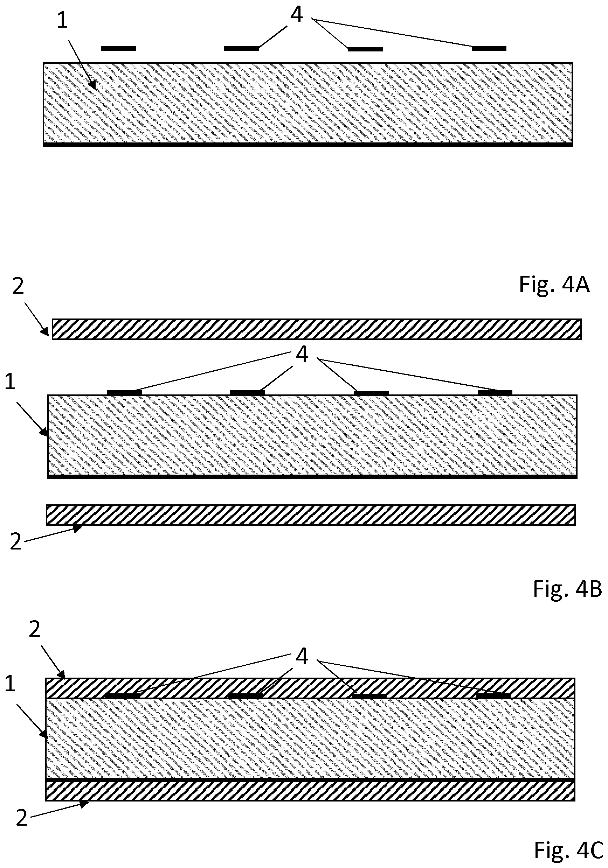

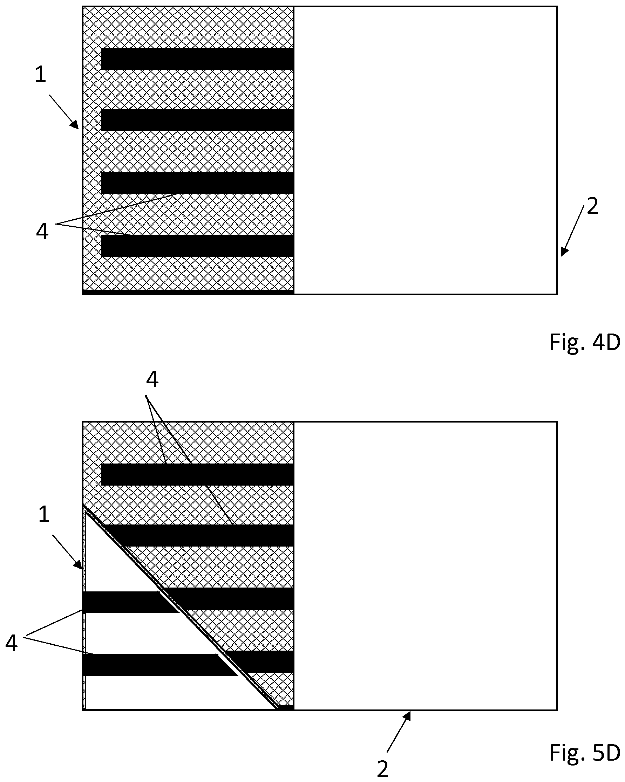

Figures 4C and 4D show a further embodiment of the panel according to the present invention which differs from the previous one in that the metal strips 4 or the metal stiffening sheets are not arranged as embedded in the thickness of the honeycomb core 1 and substantially oriented edgewise with respect to its face, but are arranged so as to have at least part, preferably their entire widest side, against at least one face of the honeycomb core 1.

As previously mentioned, the width of the strips or sheets and the thickness thereof, as well as their number and the spreading pattern, i.e. the spreading pattern on the overall surface of the panel or honeycomb core 1, may vary according to specifications of mechanical strength of the panel in relation to the overall weight thereof.

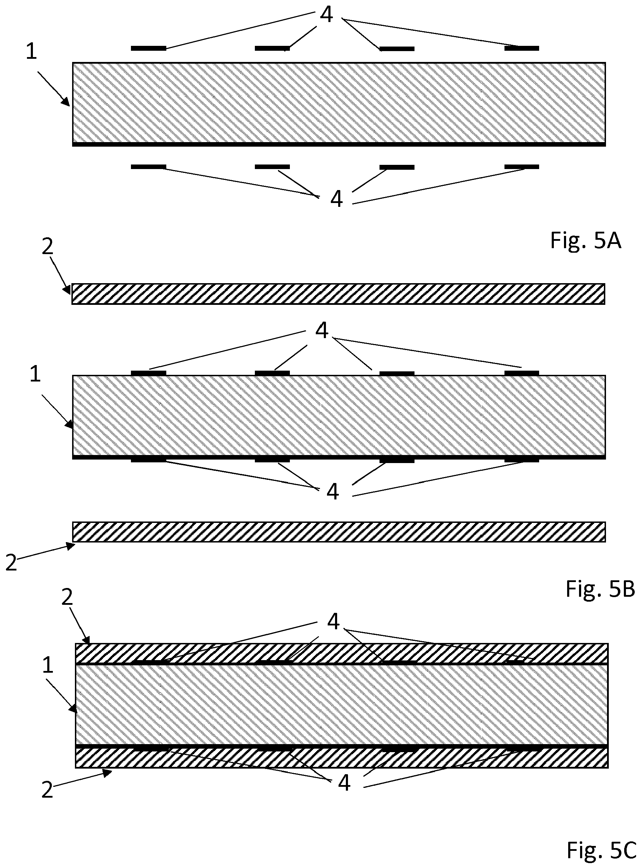

Since in case of a bending of the panel, when the concavely deformed side is the one combined with the metal strips 4 or metal sheets, these strips tend to detach from the honeycomb core and therefore they also act in decoupling way to decouple the coating layer 2 from said honeycomb core 1, the variation of figures 5C and 5D is provided, wherein the metal strips or sheets 4 are coupled to the two opposed faces of the honeycomb core 1.

This solution is based on the fact that when the metal strips or sheets are in their "flat" coupling state against the honeycomb core 1, they apply an action that increases the resistance to tensile stresses thereon, whereas in the compression state they are not effective in absorbing these stresses.

The compression action on the metal strips occurs when these are on the concave side of the panel, while the tensile action on the sheets is applied on those sheets on the convex side of the panel when the latter is subjected to bending stress. The concave side, or the side that tends to be deformed in such condition, is the one on which the stress force is applied while the convex side is the opposite one.

By providing metal stiffening strips on the two sides of the honeycomb core 1, there is always a set of strips operating under tensile stress regardless of which side of the panel the stress force acts on and therefore regardless of which side of the panel is subjected to a strain stress to be deformed to a concave shape.

As for the coating layer or layers 2, what described above for the previous embodiments of Figures 1A to 3D is true also in these two exemplary embodiments.

Figures 4A and 4B and 5A to 5B show various states of the manufacturing process similar to Figures 1A, 1B, 2A, 2B, 3A, 3B with the obvious variations due to the different position of the metal strips 4.

As regards the variation according to Figures 5A to 5D, both the position and the number and possibly also the size of the metal strips on the two sides of the honeycomb core 1 may be different from each other.

It is to be noted that one or more of the above described variations can be provided for at least one or a part of the metal stiffening strips 4, whereby the panel has at least one of the stiffening strips made according to the variations of figures 1A to 1D and/or at least one of the stiffening strips made according to the variation of figures 2A to 2D and/or at least one of the stiffening strips made according to the variation of figures 3A to 3D and/or at least one of the stiffening strips made according to the variation of figures 4A to 4D and/or at least one of the stiffening strips made according to the variation of figures 5A to 5D and/or at least one of the stiffening strips made according to one of the variations described and not shown.

With regard to the metal strips, being understood that their size, material and number may anyway vary according to the desired mechanical strength as well as depending on the desired maximum weight, according to a further characteristic that can be provided in combination with any one of the previous embodiments, the metal strips are relatively thin and may have thicknesses less than a millimeter, preferably not more than 0.5mm.

A preferred embodiment provides that the strips have thickness between 0.05mm and 0.3mm.

The width of the strips may range between a width less than the thickness of the honeycomb core and a width between 0.5 and 10cm, and preferably, when the strips are arranged so as to be flat against the honeycomb core, the width is less than 10cm and roughly from 2 to 6cm.

When the strips are arranged so that their widest side adheres against the faces of the honeycomb core, the width may vary also depending on mechanical features, in relation to the weight, desired for the panel and therefore depending on the number of strips and the density thereof in relation to the size of the panel faces.

With regard to the material, several metal materials are possible, but a preferred embodiment provides steel metal strips.

In relation to the above described embodiments, it should be noted that in any of the described variations, the metal stiffening strips are always directly coupled to the honeycomb core and are locked to the same and in the panel structure thanks to the coating layers coupled to the faces of the honeycomb core and/or to strips that seal the slits and may be additional to the reinforcing strips or be constituted by said reinforcing strips themselves.

Advantageously, according to an embodiment, the slits are sealed by high pressure/high temperature lamination, for example at 230°C and 40N/cm2, of thermoplastic strips possibly TNT-reinforced.

Depending on the application to either the edgewise strip or L-shaped strip, the width may vary although being always kept very limited.

In an embodiment, it is possible to provide that the width of the sealing strips is between about 10 and about 20mm. This sizing is enough to structurally "contain" the transversal weakening of the structure of the panel and to limit its increase in weight.

Such examples, however, should not be considered as restrictive, since the described and claimed characteristics may also apply to a panel core consisting of any lightened core, including also a honeycomb core covered by coating layers on either or both of the two faces. In this case, the housings are also open along the thickness of one of said coating layers forming the core, i.e. the metal strips are in contact with the outer surface of either or both the two coating layers forming one or two opposite faces of the core, while being locked to said core by applying an additional locking layer which may be a coating layer similar to the one already present on the core or a finishing layer having further different surface characteristics.

Basically, in this case, the panel core is a multilayer core rather than consisting only of the honeycomb core.

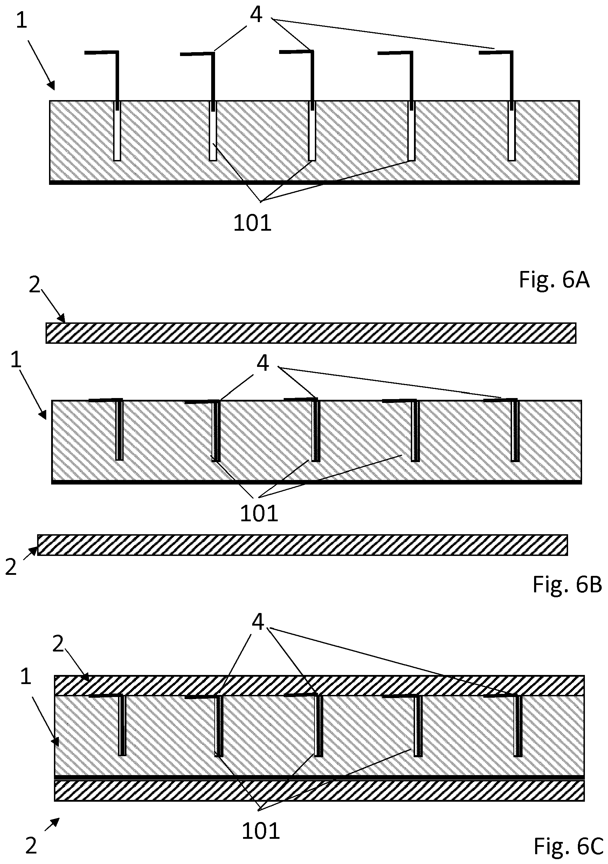

Referring to figures 6A to 6C these show, similar to Figures 1A to 1C, an embodiment variation of the panel.

In figures 6A to 6C, same reference numbers have been used for equal parts or parts having the same functions with respect to the embodiment of figures 1A to 1C.

As evident, the only difference is the shape of the strips 4 having "L" section, a branch of the L being intended to be inserted into a corresponding slit 101, while the other branch remains outside the slit and lies flat against the surface of the panel, i.e. the honeycomb core 1.

Therefore, not only the strip has a ribbing providing it with greater stiffness, but also operates simultaneously according to the first embodiment of figures 1A to 1D and the respective variations 2A to 2D and 3A to 3D, as well as according to the variations of figures 4A to 4D and 5A to 5D.

Similarly, stiffening and/or sealing strips of the slits can be provided, as in the variation according to figures 3A to 3D.

According to still another characteristic, in place of metal strips or in place of at least some of the metal strips, strips made of high-Tf plastic material can be used, i.e. having high heat-softening temperature and woven fibers such as of strap type or the like.

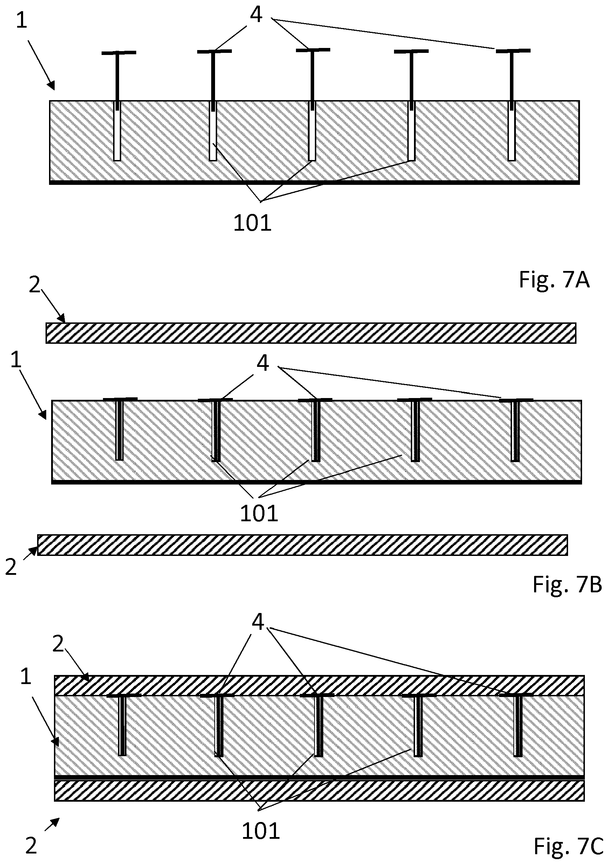

Figures 7A to 7D show, similar to the previous figures, an embodiment variation in which the strips have "T"-shaped section.

In this variation, if the shaping of the strips was to be obtained by folding, it would be more complex, whereas when the strips are obtained, for example, by extrusion, which is the case of plastic strips, or by lamination, the T-shape can be directly obtained in a simple manner.

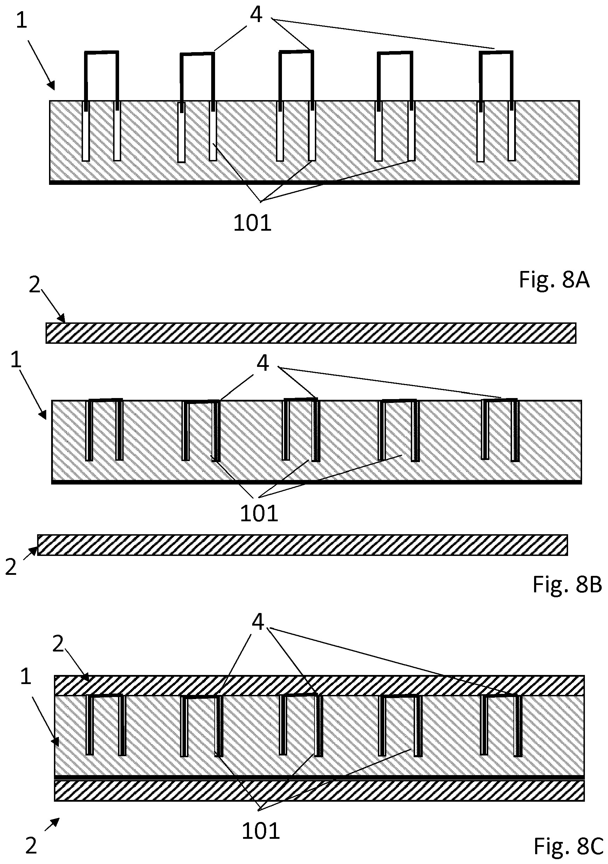

Figures 8A to 8D show, similar to the previous figures, an embodiment variation in which the strips have rectangular section open to one side, i.e. without one side or shaped as a staple.

The advantage of this variation is that it doubles the number of stiffening strips oriented perpendicularly to the panel or core and, at the same time, it provides a flat strip combined with the two perpendicular strips and in combination two ribs consisting of the folding edges.

From the strip manufacturing point of view, this variation is simpler than the T-shaped variation since it can be obtained by continuously folding a flat strip which is unwound for example from a reel and passes through a folding station having folding walls that gradually lift the two longitudinal side flaps of the strip and, in combination with central sliding blocks, form a longitudinal folding edge along each area connecting the longitudinal side flap and a central band.

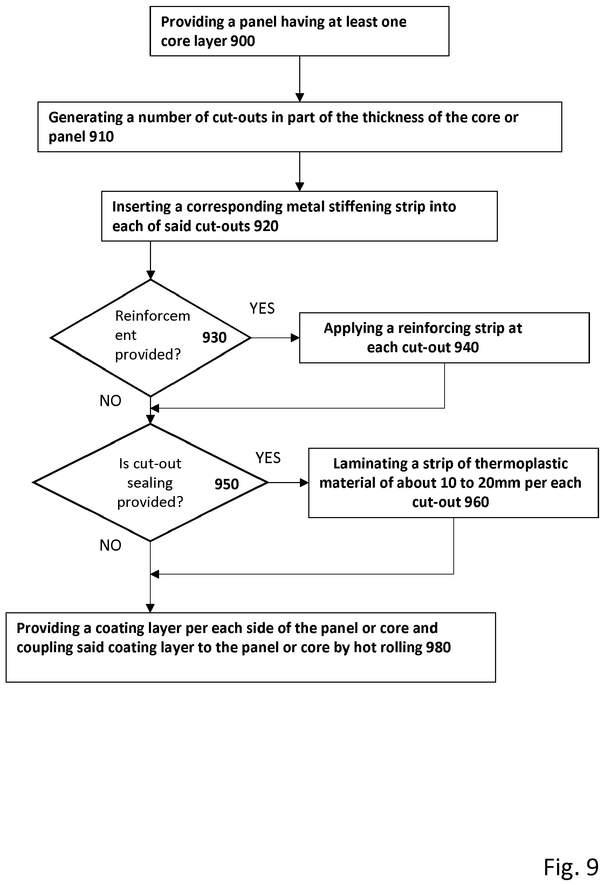

Referring to the flow diagram of figure 9, this shows the main steps for manufacturing a panel according to the above described examples involving at least one cut-out in the thickness of the panel and/or the honeycomb core thereof.

At step 900 a panel or a honeycomb core of said panel is prepared and at step 910 one or more cut-outs are made in the thickness of the panel or honeycomb core. The cut-outs extend only partially in the thickness of the panel or honeycomb core, thus being open only at one face of said panel or said honeycomb core.

At step 920, each strip is introduced in a corresponding cut-out. The stiffening strips can be either flat and angular, i.e. with L-shaped, T-shaped, or rectangular or square section and without one side.

After inserting the stiffening strips, at step 930 it is possible to choose whether to provide a reinforcing strip of thermoplastic material for at least some of the cut-outs where a corresponding strip is housed. If so, at step 940, these reinforcing strips are arranged in coincidence with each cut-out or part of them.

At step 950 it is required to choose between the variation in which at least part of the cut-outs, or all of them, are sealed with thermoplastic material or if this is not necessary. In the former case, then a strip of thermoplastic material having high heat-softening temperature is arranged at all the cut-outs or part of them. This strip can be provided in addition to the reinforcing strips or be the reinforcing strip itself. In this case, this step 950 and 960 is a repeat and can be omitted.

Once the sealing strips are applied and sealing is carried out by hot rolling as described above, the coating layer or layers can be coupled to the panel or to the honeycomb core, as depicted in step 980, for example by hot rolling.

In case of manufacturing a panel according to the embodiments of figures 4 and 5, in which the strips are arranged flat against one or both faces of the panel or honeycomb core, the process substantially follows the diagram of figure 9, obviously omitting the steps 910 950 and 960, and the step 920 being modified as regards the simple arrangement of the strips on the surface or surfaces of the panel or core.

Also for the manufacture of the variations in figures 4 and 5, there are still the other steps involving the reinforcing strips and the application of the coating layers.

In an embodiment variation, the strips may be combined not directly with the core layer but with an intermediate structure panel having a laminate layer on either or both of the two faces of the core layer. In this case, of course, the method according to Figure 9 and the above-mentioned variations provides, upstream of the depicted steps, a laminating step to laminate said layer or layers on the face or faces of the core layer.

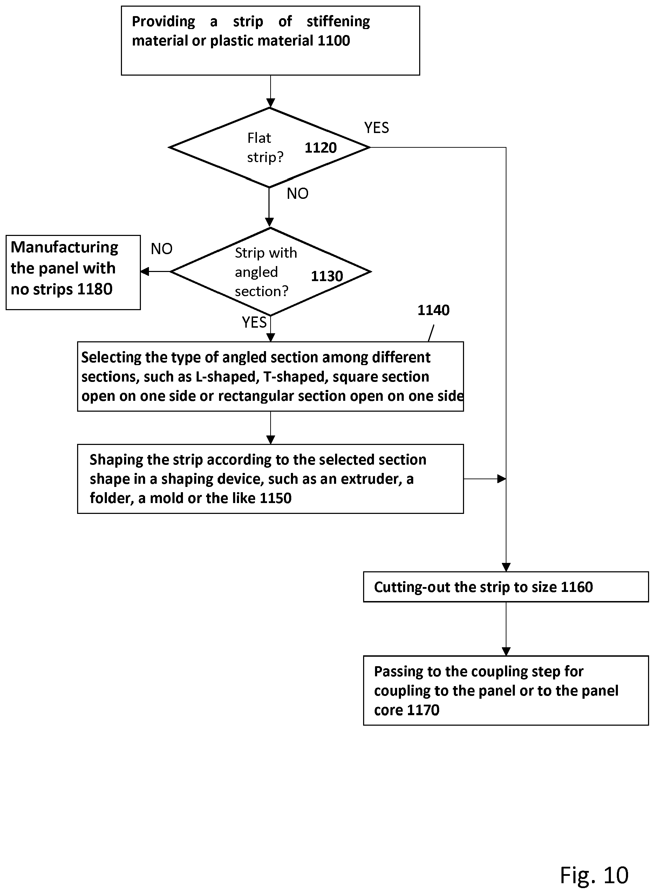

Figure 10 shows a flow diagram relating to the steps to prepare the stiffening strips. These steps precede, directly or at different preceding times, the steps according to figure 9 and the described variations.

At step 1100 a strip of stiffening material, which can be metal or plastic material, is provided.

The plastic strip or metal strip can be obtained by extrusion or drawing and in this case they may already have the selected shapes or profiles.

When, as in the case of the process of figure 10, at the beginning there is a flat strip preferably wound in the form of a coil, the process initially requires the selection of the sectional shape of the strip. When the flat strip is selected, as shown at step 1120, then the process directly passes to the cutting-out step 1160 and then to the panel application according to modes of the example described with reference to the variation of figure 9.

On the contrary, when an angled strip is selected as in step 1130, the process includes the steps 1140 in order to define the sectional shape and, as a result, the corresponding shaping of the strip 1150. Once the strip is shaped, at step 1160 it is also cut to size and then delivered to the application 1170 to the panel and/or core.

If there is no selection between a flat strip and a shaped strip, the process continues with the formation of the panel without strips, as depicted at step 1180.

## Claims

1. Thermoformable panel composed of:
at least one core plate having honeycomb structure whose cells have axis arranged substantially parallel to each other and oriented substantially perpendicularly to the faces of said core plate;
at least one coating layer coupled to said core plate on at least one face of said core plate;
and wherein the coating layer is composed of a film or skin of thermoplastic material which is coupled to said core plate by chemical/physical coupling;
while one or more stiffening elements are provided and composed of at least one or more metal or plastic strips;
which strips are spread on the surface extent of said at least one face of said panel to which said at least one coating layer is coupled;
the strip or strips being restrained so as to be locked in the panel structure thanks to at least one coating layer of the panel itself.

2. Panel according to claim 1, wherein the coating layer consists of a thermoplastic skin or film high-temperature coupled to a nonwoven fabric so that the ratio of film weight to nonwoven weight is such to prevent the cold flow of the fibers while the finished panel is under stress.

3. Panel according to claims 1 or 2, wherein the plastic strip is of strap-type or the like.

4. Panel according to one or more of the preceding claims wherein the strips are spread on the surface extent of said at least one face of said honeycomb core to which said at least one coating layer is coupled;
the strip or strips are restrained so as to be locked to the honeycomb core by said at least one coating layer coupled by chemical-physical adhesion against said at least one face of the honeycomb core.

5. Panel according to one or more of the preceding claims, wherein said strips are at least partially embedded in the thickness of the honeycomb core.

6. Panel according to claim 5, in which at least some strips or all the strips are embedded in housings in the form of accommodating cut-outs or slits obtained in the thickness of the honeycomb core at least partially along the width of said strips.

7. Panel according to claim 5 or 6, wherein at least some or all the strips are embedded, substantially along their entire width, in corresponding housings obtained in the thickness of the honeycomb core.

8. Panel according to one or more of preceding claims 5 to 7, wherein at least some of the housings or all housings are oriented substantially perpendicular to at least one face of the honeycomb core and at least part of at least some of the strips are positioned sideways or edgewise, i.e. perpendicularly to said at least one face of the honeycomb core.

9. Panel according to one or more of claims 4 to 8, in which the housings and thus the strips deeply extend to almost the entire thickness of the honeycomb core and end at a certain distance from the face opposite to that where the strips are inserted, without passing through the honeycomb core itself from one side thereof to the other.

10. Panel according to one or more of preceding claims 4 to 9, wherein the strips have angled, preferably "L-shaped", cross-section.

11. Panel according to one or more of the preceding claims, wherein the coating layer comprises additional strips of reinforcing material which extend each along the extent of a corresponding metal strip and which, when coupled, are incorporated into the thickness of the coating layer itself at least partially merging therewith.

12. Panel according to claim 11 wherein said reinforcing strips are applied in a position in-between the honeycomb core and the coating layer and coincident with a corresponding metal stiffening strip, or else on the outer face of the coating layer still in a position coincident with a corresponding strip.

13. Panel according to one or more of the preceding claims, wherein the housings in which the flat or L-shaped strips are inserted are sealed by high pressure/high temperature lamination of thermoplastic strips.

14. Panel according to one or more of the preceding claims, wherein the reinforcing strips, as regards either at least some of said strips or all of said strips and either at least part of the width of their widest side or the whole widest side, are arranged in a position where said widest side is in contact with the surface of at least one face of the panel or honeycomb core, said strip or strips being locked in the structure of said panel or against said honeycomb core by means of a coating layer which, when coupled to said panel or said honeycomb core, overlaps also said strip or strips.

15. Panel according to claim 14 wherein at least some of the stiffening strips are arranged in a contact position against at least one face of the honeycomb core along the entire length and width extent of their widest side.

16. Panel according to claims 14 or 15, wherein at least part or the whole widest side of the stiffening strips are adherent against the face of the honeycomb core, one or more stiffening strips are provided to be coupled to both the opposite faces of the panel or said honeycomb core.

17. Panel according to one or more of the preceding claims wherein all the stiffening strips are oriented in the same direction and parallel to each other, preferably arranged in a straight line.

18. Panel according to claim 17, wherein the stiffening strips or at least some of them are oriented parallel to the longitudinal length of the honeycomb core or panel, or along the direction of the longest side of the honeycomb core or panel.

19. Panel according to one or more of the preceding claims, wherein the stiffening strips have thicknesses less than a millimeter, preferably not more than 0.5mm.

20. Panel according to claim 19 wherein the stiffening strips have thickness between 0.05mm and 0.3mm.

21. Panel according to one or more of the preceding claims wherein the stiffening strips have width comprised between a width less than the thickness of the honeycomb core, when they are arranged edgewise, and a width between 0.5 and 10cm, when the strips are arranged in flat position, i.e. parallel to the faces of the panel and/or the honeycomb core.

22. Panel according to one or more of the preceding claims wherein the strips are made of steel.

23. Panel according to one or more of the preceding claims wherein at least some of the strips are at least partially embedded in the thickness of the panel or honeycomb core and wherein some of the strips are arranged with at least part or the whole widest side thereof either in contact with the faces of the honeycomb core or parallel to the panel faces.

24. Panel according to one or more of the preceding claims wherein the coating layer consists of at least one plate of thermoplastic material filled with vegetable and/or mineral inerts, for example polypropylene or other thermoplastic materials.

25. Panel according to claim 25 wherein the thickness of the coating layer may range between 0.2 and 2mm, preferably between 0.2 and 0.6mm.

26. Method for manufacturing a thermoformable panel according to one or more of the preceding claims and wherein at least some of the strips are at least partially embedded in the thickness of the honeycomb core, which method comprises the following steps:
step a) generating in the thickness of the honeycomb core a number of cut-outs or housings partially extending in said thickness, which cut-outs are open only to one face of said panel and/or honeycomb core and have a predetermined pattern;
step b) inserting into each of said cut-outs a corresponding metal stiffening strip;
step c) coupling at least one coating layer to one or two opposite faces of the panel or honeycomb core by means of physical chemical adhesion.

27. Method according to claim 26 wherein reinforcements of the coating layer coinciding with at least some of the stiffening strips are provided, the step c) being preceded by a step
b2) in which reinforcing strips of thermoplastic material, preferably a material equal to that of the reinforcing layer, are arranged so as to be directly overlapped along at least some of the stiffening strips, or else
b3) in which reinforcing strips of thermoplastic material, preferably a material equal to that of the reinforcing layer, are arranged so as to be directly overlapped to the coating layer on the opposite side with respect to the one in contact with the honeycomb core and, when coupled to the honeycomb core, in a position coincident with at least some of the stiffening strips before step c) is carried out.

28. Method for manufacturing a thermoformable panel according to one or more of the preceding claims and wherein at least some of the stiffening strips have part of their widest side, preferably their widest side, adherent against at least one of the faces of the honeycomb core, which method comprises the following steps:
step a1) arranging one or more stiffening strips on one or both sides of the panel or honeycomb core;
step c) coupling, by means of physical chemical adhesion, at least one coating layer to the two opposite faces of the panel or honeycomb core, each of which coating layers adheres against both the corresponding face of the panel or honeycomb core and the metal strip or strips adhering against said faces.

29. Method according to one or more of claims 26 to 28 wherein, in step c, the coupling takes place in a rolling mill at a heating temperature preferably between 180°C and 300°C, in particular between 210°C and 240°C, preferably about 230°C and optionally a concurrent thermoforming step of the panel in a mold according to a pattern of the three-dimensional panel may be provided.
